# EUROPÄISCHE PATENTSCHRIFT

(11) **EP 0 467 029 B1**
(45) Veröffentlichungstag und Bekanntmachung des Hinweises auf die Patenterteilung: **10.08.1994**
(21) Anmeldenummer: 91107273.4
(22) Anmeldetag: 04.05.1991
(51) Int. Cl.: B60H 1/26

(54) **Lüfterdach für Fahrzeuge**
Ventilating roof for vehicles
Toit à ventilation pour véhicules

(30) Priorität: 19.07.1990 DE 4022928
(43) Veröffentlichungstag der Anmeldung: 22.01.1992
(73) Patentinhaber: Webasto AG Fahrzeugtechnik, D-82131 Stockdorf (DE)
(72) Erfinder: Fürst, Arpad, W-8034 Germering (DE); Schreiter, Thomas, W-8000 München 70 (DE); Reinsch, Burkhard, W-8027 Neuried (DE); Paetz, Werner, W-8050 Freising (DE)

(56) Entgegenhaltungen:
- EP-A- 0 382 123
- DE-A- 3 840 694
- DE-A- 3 903 035
- DE-C- 3 540 546
- DE-U- 8 808 782
- PATENT ABSTRACTS OF JAPAN vol. 13, no. 193 (M-822)(3541)9. Mai 1989 & JP-A-1 018 716 ( NISSAN ) 23. Januar 1989

## Beschreibung

Die Erfindung bezieht sich auf ein Lüfterdach für Fahrzeuge mit einem in einer festen Dachhaut ausgebildeten Dachausschnitt, der mittels eines Deckels verschließbar ist, der durch Verschwenken um eine an oder nahe seiner Hinterkante liegende Schwenkachse in eine Lüfterstellung schwenkbar ist, in welcher bei mindestens näherungweise in Höhe der Dachhaut gehaltener Deckelhinterkante die Deckelvorderkante in Abstand unterhalb der Dachhaut liegt und zwischen der Deckelvorderkante und der Vorderkante des Dachausschnittes ein Lüftungsspalt gebildet wird, der über einen vor dem Dachausschnitt unterhalb der Dachhaut liegenden, in den Fahrzeuginnenraum führenden Lüftungskanal mit wenigstens einem Luftdurchtrittsspalt in einem festen Dachhimmel verbunden ist, welcher die Dachhaut mindestens in einem vor dem Dachausschnitt liegenden Bereich untergreift.

Ein solches Lüfterdach ist aus der DE-A-3 840 694 bekannt. Bei einem solchen Lüfterdach ist nur eine passive Entlüftung des Fahrzeuginnenraumes möglich, und zwar aufgrund eines während der Fahrt über der festen Dachhaut entwickelten Unterdrucks oder dadurch, daß heißere Luft aus dem Fahrzeuginnenraum aufsteigt. Bei stehendem Fahrzeug läßt jedoch die zu erzielende Belüftungswirkung zu wünschen übrig. Es gibt außerdem zahlreiche Versuche, zur Erzielung einer aktiven Entlüftungswirkung Fahrzeugdächer im Bereich eines öffnungsfähigen Deckels mit einem Gebläse zu versehen. Dabei ist aus der JP-A-1-18 716 eine Anordnung bekannt, bei der sich bei ausgestellter Deckelhinterkante ein mit Lüftern versehener Balken in einen dabei freigegebenen Lüftungsspalt hineinstellt. Mittels einer solchen Lüfterleiste ist zwar eine gute aktive Entlüftung des Fahrzeuginnenraumes möglich, die Lüftungsleiste stört jedoch sowohl im geöffneten Zustand des Deckels als auch bei geschlossenem Deckel den optischen Eindruck eines Fahrzeugdaches ganz empfindlich.

Der im Anspruch 1 angegebenen Erfindung liegt die Aufgabe zugrunde, ein Lüfterdach der eingangs genannten Art zu schaffen, das auf besonders unauffällige und platzsparende Weise auch eine für die Fahrzeuginsassen angenehme aktive Entlüftung ermöglicht.

Diese Aufgabe wird erfindungsgemäß dadurch gelöst, daß in dem Lüftungskanal mindestens ein elektromotorisch angetriebenes Gebläse eingebaut ist.

Bei dem Lüfterdach gemäß der Erfindung erfordert die aktive Entlüftung keine optisch und/oder strömungstechnisch störenden Dachaufbauten. Die nutzbare Dachöffnungs- und -durchsichtfläche bleibt ungeachtet der Möglichkeit der aktiven Entlüftung voll erhalten. Das Gebläse sitzt vor dem Dachausschnitt und damit an einer Stelle, die im Hinblick auf eine geringe Bauhöhe des Daches unkritisch ist. Beim Einschalten des Gebläses streicht die Luft entlang der Innenseite der Frontscheibe des Fahrzeuges. Damit wird ein Anblasen das Fahrzeuginsassen vermieden. Das im Lüftungsspalt sitzende Gebläse kann für eine geringere Leistungsaufnahme als der normalerweise ohnehin vorhandene Bordlüfter ausgelegt sein, weil die Luftwiderstände im Lüftungskanal gering sind. Durch die Anordnung des Gebläses oberhalb eines festen Dachhimmels wird ein besonders ansprechendes Aussehen vom Fahrzeuginnenraum her gewährleistet.

In den Luftdurchtrittsspalt kann mindestens ein Lüftungsgitter eingesetzt sein, wobei das Gebläse und das Lüftungsgitter zu einer Baueinheit zusammengefaßt sein können. Insbesondere kann das Gebläse ein Gehäuse aufweisen, das mit dem Lüftungsgitter einstückig verbunden ist. Dabei ist das zugleich das Gebläsegehäuse bildende Lüftungsgitter zweckmäßig als Austauschteil zu einem einfachen Lüftungsgitter ausgebildet, wie es bei Lüfterdächern ohne aktive Entlüftung bereits benutzt wird. Das Lüfterdach kann daher leicht mit und ohne aktive Entlüftung ausgelegt werden, ohne daß es zu einer Änderung der Optik vom Fahrzeuginnenraum her kommt.

Entsprechend einer abgewandelten Ausführungsform kann das Gebläsegehäuse aber auch von einem Dachrahmen gebildet sein, welcher den Dachausschnitt untergreift und den Deckel sowie die zugehörigen Funktionsteile trägt.

Der Deckel kann als Solarmodul ausgebildet sein, von dem das elektromotorisch angetriebene Gebläse mit Strom versorgt wird. In einem Stromkreis zwischen dem Solarmodul und dem Gebläse befindet sich zweckmäßig eine Kontakteinrichtung, die selbsttätig mindestens dann schließt, wenn der Deckel in der Lüfterstellung steht, wobei die Kontakteinrichtung auch derart ausgebildet sein kann, daß sie den Stromkreis zwischen dem Solarmodul und dem Gebläse in der Schließstellung des Deckels gleichfalls geschlossen hält.

Das Gebläse kann auch an ein Bordnetz anschließbar sein. Um in einem solchen Fall eine übermäßige Entladung der Bordstromquelle zu verhindern, ist vorzugsweise eine Überwachungsstufe vorgesehen, die das Gebläse von dem Bordnetz trennt, wenn die Ladung der Bordstromquelle einen vorgegeben Schwellwert unterschreitet.

In dem Steuerstromkreis des Gebläses kann mindestens ein Zeitschalter liegen. Dies ermöglicht es, das Gebläse zu einer vorbestimmten Uhrzeit einzuschalten und/oder auszuschalten oder das Gebläse beispielsweise für eine vorbestimmte Zeitdauer nachlaufen zu lassen.
Zur Steuerung des Gebläses kann auch ein Thermoschalter vorgesehen sein, der die aktive Entlüftung selbsttätig wirksam macht, wenn im Fahrzeuginnenraum ein vorbestimmter Temperaturgrenzwert überschritten wird.

Das Gebläse kann insbesondere als Querstromgebläse oder Axialgebläse ausgebildet sein. Mindestens ein solches Gebläse kann in Fahrzeugquerrichtung mittig in dem Lüftungskanal angeordnet sein, wobei dann zu beiden Seiten des Gebläses freie Lüftungsöffnungen verbleiben. Die Auslegung kann aber auch so getroffen werden, daß in Fahrzeugquerrichtung auf der rechten und der linken Seite des Lüftungskanals mindestens jeweils ein Gebläse angeordnet ist und dazwischen freie Lüftungsöffnungen verbleiben.

Um eine aktive Entlüftung auch bei geschlossenem Deckel zu ermöglichen, können im hinteren Bereich des Fahrzeugdaches Entlüftungsschlitze vorgesehen sein, die mit einem Raum zwischen der Dachhaut und einem Dachhimmel in Verbindung stehen. Über diesen Raum und die Entlüftungsschlitze kann dann mittels des Gebläses Luft aus dem Fahrzeuginnenraum abgeführt werden, während der Deckel in der Schließstellung steht.

Vorzugsweise ist der Deckel, wie an sich bekannt (DE-A- 38 07 961 und DE-A- 38 40 694) mit seiner Hinterkante unter die Dachhaut absenkbar oder über die Dachhaut ausstellbar und nach hinten unter bezw. über die Dachhaut in eine Offenstellung verschiebbar ist, in welcher der Deckel den Dachausschnitt mindestens teilweise freilegt.

Ausführungsbeispiele des Lüfterdaches nach der Erfindung sind nachstehend anhand der Zeichnungen näher erläutert. Es zeigen:
- Fign.1,2 und 3: schematische Längsschnitte durch ein Lüfterdach, wobei der Deckel in der Schließstellung, der Lüfterstellung bzw. in zurückgeschobener Stellung dargestellt ist,
- Fig. 4: eine Draufsicht auf das Lüfterdach gemäß den Fign. 1 bis 3,
- Fig. 5: den Schnitt entlang der Linie V-V der Fig.4
- Fig. 5A: einen Schnitt durch ein Lüftungsgitter ohne Gebläse,
- Fig. 6: eine Draufsicht ähnlich Fig.4 für eine abgewandelte Ausführungsform des Lüfterdaches,
- Fig. 7: den Schnitt entlang der Linie VII-VII der Fig. 6,
- Fig. 8: einen Teillängsschnitt durch ein abgewandeltes Lüfterdach mit Axialgebläse bei in der Lüfterstellung stehendem Deckel,
- Fign.9,10 u. 11: schematische Längsschnitte durch ein Lüfterdach in unterschiedlichen Deckelstellungen, welche die Ausbildung einer Kontakteinrichtung erkennen lassen, die selbsttätig schließt, wenn der Deckel in die Lüfterstellung übergeht,
- Fign.12,13 u.14: verschiedene Ausführungsformen für den Speise- und Steuerstromkreis des Gebläses,
- Fig. 15: einen schematischen Dachlängsschnitt für eine weiter abgewandelte Ausführungsform, sowie
- Fign.16,17 u. 18: schematische Längsschnitte ähnlich den Fign. 1,2 und 3 für ein Lüfterdach, bei dem der Deckel über der festen Dachfläche nach hinten geschoben werden kann.

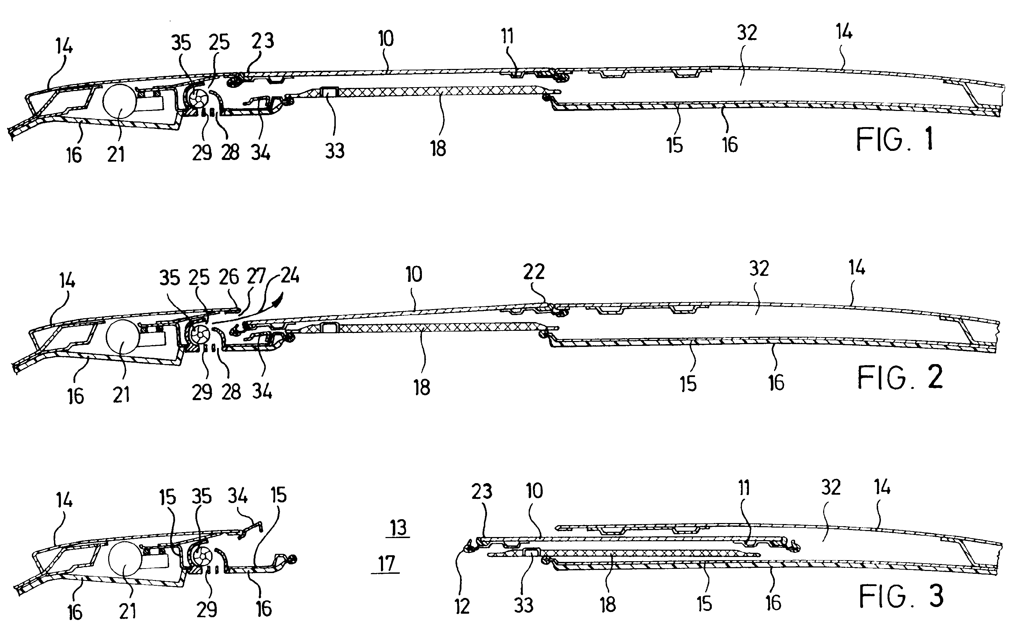

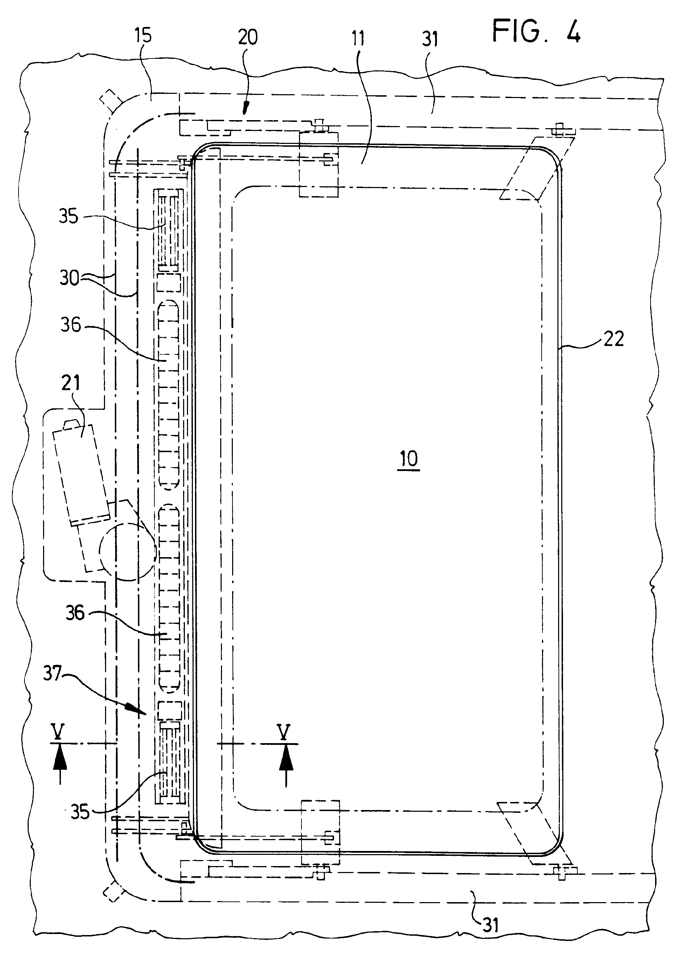

Das in den Fign. 1 bis 5 veranschaulichte Lüfterdach weist einen aus durchscheinendem oder durchsichtigem Werkstoff, beispielsweise Glas, gefertigten Deckel 10 auf, der auf einem umlaufenden Deckelträger 11 abgestützt ist. Auf einen vorstehenden Außenrand des Deckelträgers 11 ist ein Dichtungsprofil 12 zum Abdichten eines Randspalts zwischen dem Außenrand des Deckels 10 und dem benachbarten Rand eines üsDachausschnittes 13 in der Deckelschließstellung (Fig. 1) aufgesetzt. Der Dachausschnitt 13 ist im vorderen Teil der festen Dachhaut 14 ausgebildet, und er kann mittels des Deckels 10 wahlweise verschlossen oder mindestens teilweise freigelegt werden.
Unterhalb der Dachhaut 14 sind ein Dachrahmen 15 und ein fester Dachhimmel 16 angebracht, die eine unterhalb des Dachausschnittes 13 liegende Öffnung 17 begrenzen. Diese Öffnung kann mittels eines Schiebehimmels 18 abgedeckt werden (Fign. 1 und 2).
Der Deckel 10 läßt sich mittels einer in Fig. 4 nur schematisch angedeuteten Verstellmechanik 20, zu der von einem Antriebsmotor 21 angetriebene Gewindekabel 30 gehören, um eine (gedachte), an oder nahe seiner Hinterkante 22 liegende Schwenkachse in eine Lüfterstellung gemäß Fig. 2 schwenken, in welcher die Deckelvorderkante 23 in Abstand unterhalb der Dachhaut 14 liegt. Dabei wird die Deckelhinterkante 22 mindestens näherungsweise in Höhe der Dachhaut gehalten. Wenn während der Fahrt des Fahrzeuges an der Außenseite der Dachhaut 14 ein Unterdruck gegenüber dem im Fahrzeuginnenraum herrschenden Druck entsteht, bildet sich ein Luftstrom aus, der in Fig. 2 bei 24 angedeutet ist. Der Luftstrom 24 durchläuft dabei einen Lüftungskanal 25, der einen zwischen der Vorderkante 23 des abgesenkten Deckels und der Vorderkante 26 des Dachausschnittes 13 gebildeten Lüftungsspalt 27 mit einem Luftdurchtrittsspalt 28 des Dachhimmels 16 verbindet. Der Luftdurchtrittsspalt 28 befindet sich unterhalb der Dachhaut 14 und vor der Vorderkante 26 des Dachausschnittes 13. In den Luftdurchtrittsspalt 28 ist ein Lüftungsgitter 29 eingesetzt.

Der im vorderen Teil der Dachhaut 14 ausgebildete Dachausschnitt 13 läßt sich mindestens teilweise freilegen, indem der Deckel 10, vorzugsweise ausgehend von der Lüfterstellung gemäß Fig. 2, mit seiner Hinterkante 22 unter die Dachhaut 14 um einen Betrag abgesenkt wird, der vorzugsweise kleiner als die Absenkung der Deckelvorderkante 23 in der Lüfterstellung (Fig. 2) ist. Bei diesem bevorzugten Funktionsablauf wird gleichzeitig die zuvor in die Lüfterstellung abgesenkte Deckelvorderkante 23 in eine Zwischenstellung zwischen der Lüfterstellung (Fig. 2) und der Schließstellung (Fig. 1) angehoben. Der Deckel 10 wird auf diese Weise in eine Schiebestellung gebracht, in der er im wesentlichen parallel zu der Dachhaut 14 liegt (Fig. 3). Danach kann der Deckel 10 entlang von Längsführungen 31 (Fig. 4), die zu beiden Seiten des Dachausschnittes 13 verlaufen und sich von dem Dachausschnitt 13 nach hinten erstrecken, unter die Dachhaut 14 in eine Offenstellung verschoben werden, in welcher der Deckel 10 den Dachausschnitt 13 mehr oder minder weit freilegt (Fig. 3). Der Deckel 10 wird dabei in einem Raum 32 zwischen dem an den Dachausschnitt 13 nach hinten anschließenden Teil der Dachhaut 14 und dem darunter liegenden Dachhimmel 16 aufgenommen.

Während der Deckel 10 in der Schließstellung (Fig. 1), der Lüfterstellung (Fig. 2) oder einer Zwischenstellung zwischen diesen beiden Stellungen steht, kann der Schiebehimmel 18 durch Fassen an einer Griffmulde 33 wahlweise zwischen seiner Schließstellung (Fig. 1) und einer zurückgeschobenen Stellung (Fig. 3) verstellt werden, um den Lichteinfall in das Fahrzeuginnere durch den Deckel 10 hindurch zu beeinflussen. Es können an sich bekannte Verstellmittel (DE-PS 29 23 904) vorgesehen sein, um beim Zurückschieben des Deckels 10 in den Raum 32 den Schiebehimmel 18 mitzunehmen. Zweckmäßig ist ein Windabweiser 34 vorgesehen, der aus einer Ruhestellung (Fign. 1 und 2) in eine Arbeitsstellung (Fig. 3) übergeht, wenn der Deckel 10 zurückgeschoben wird. Die Verstellmechanik 20 kann in der aus der DE 38 07 961 A1 bekannten oder in der DE-Patentanmeldung P 39 30 755.7 im einzelnen beschriebenen Weise aufgebaut sein. Sie bedarf daher vorliegend keiner näheren Erläuterung.

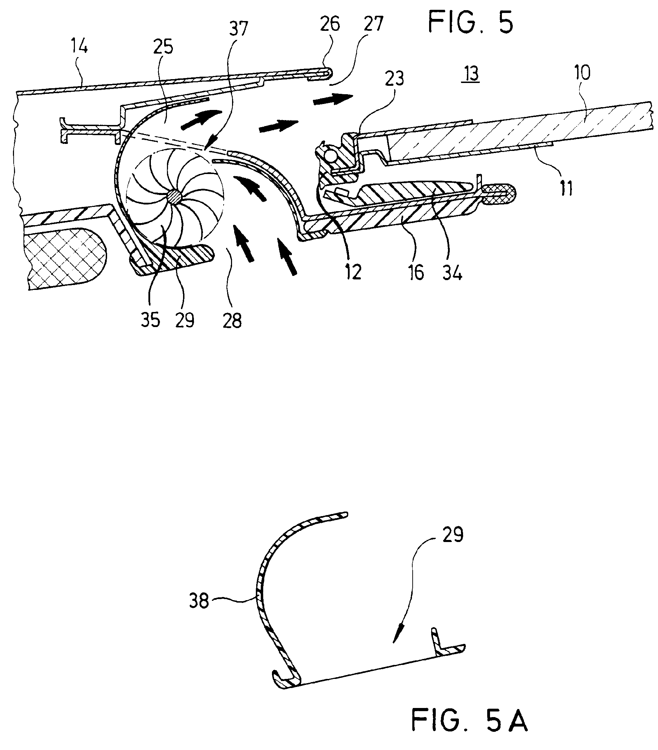

In den Lüftungskanal 25 ist bei der Ausführungsform nach den Fign. 4, 5 und 5A auf dessen rechter und linker Seite jeweils ein elektromotorisch angetriebenes Querstromgebläse 35 eingebaut, wobei zwischen den beiden seitlichen Querstromgebläsen 35 freie Lüftungsöffnungen 36 verbleiben. Bei dem veranschaulichten Ausführungsbeispiel sind die Querstromgebläse 35 und das Lüftungsgitter 29 zu einer insgesamt mit 37 bezeichneten Baueinheit zusammengefaßt, wobei die Gebläse 35 ein Gehäuse 38 aufweisen, das mit dem Lüftungsgitter 29 einstückig verbunden ist. Das Lüftungsgitter 29 kann zweckmäßig als Austauschteil zu einem einfachen Lüftungsgitter ausgebildet sein, wie es bei einem Lüfterdach ohne in den Lüftungskanal eingebautes Gebläse verwendet wird (DE-A 38 40 694 und die älteren DE-C- 39 30 054.4 und DE-A- 39 30 755.17). Es versteht sich, daß das Lüftungsgitter 29 auch in seiner Längsrichtung geteilt, z.B. zwei- oder mehrteilig ausgebildet sein kann.

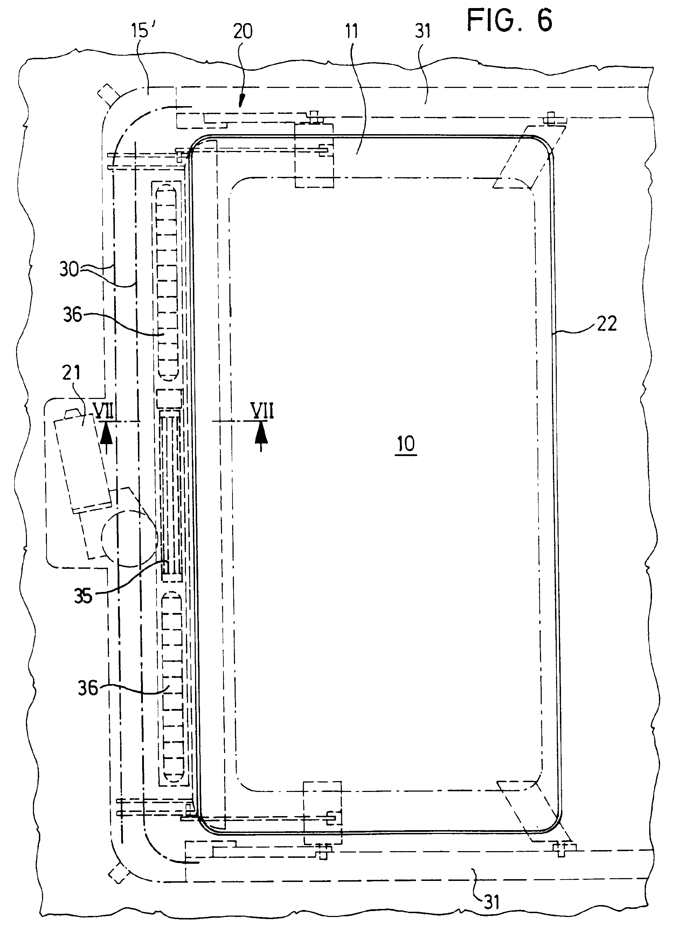

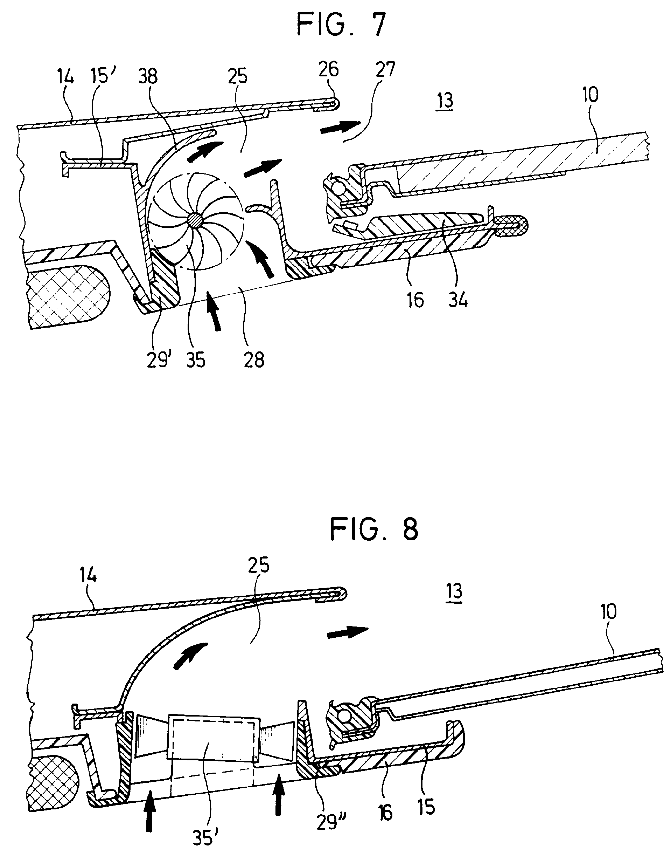

Bei der abgewandelten Ausführungsform gemäß den Fign. 6 und 7 ist ein Querstromgebläse 35 in Fahrzeugquerrichtung mittig in dem Lüftungskanal 25 angeordnet, wobei freie Lüftungsöffnugnen 36 zu beiden Seiten des Gebläses 35 verbleiben. Bei dieser Ausführungsform wird das Gehäuse 38′ des Querstromgebläses 35 von dem Dachrahmen 15′ gebildet, welcher den Dachausschnitt 13 untergreift und den Deckel 10 sowie die zugehörigen Funktionsteile trägt. In den von dem Dachrahmen 15′ begrenzten Luftdurchtrittsspalt 28 ist ein Lüftungsgitter 29′ eingesetzt, das im Bereich des Querstromgebläses 35 einen Lufteinlaß für das Gebläsegehäuse 38′ bildet.

Ein die Gebläsegehäuse bildender Dachrahmen kann auch bei Ausführungsformen mit mehreren Gebläsen, beispielsweise entsprechend Fig. 4, vorgesehen werden. Umgekehrt läßt sich auch ein das Gebläsegehäuse bildendes Lüftungsgitter 29 bei mittiger Anordnung des Querstromgebläses gemäß Fig. 6 vorsehen.

Fig. 8 zeigt eine weiter abgewandelte Ausführungsform des Lüfterdaches, bei welcher in dem Lüftungskanal 25 ein oder mehrere in Fahrzeugquerrichtung nebeneinander angeordnete Axialgebläse 35′ sitzen. Bei der Ausbildung gemäß Fig. 8 sind das oder die Axialgebläse 35′ an dem Lüftungsgitter 29˝ befestigt. Stattdessen ist es auch möglich, den Dachrahmen 15 so auszulegen, daß er das oder die Axialgebläsegehäuse bildet.

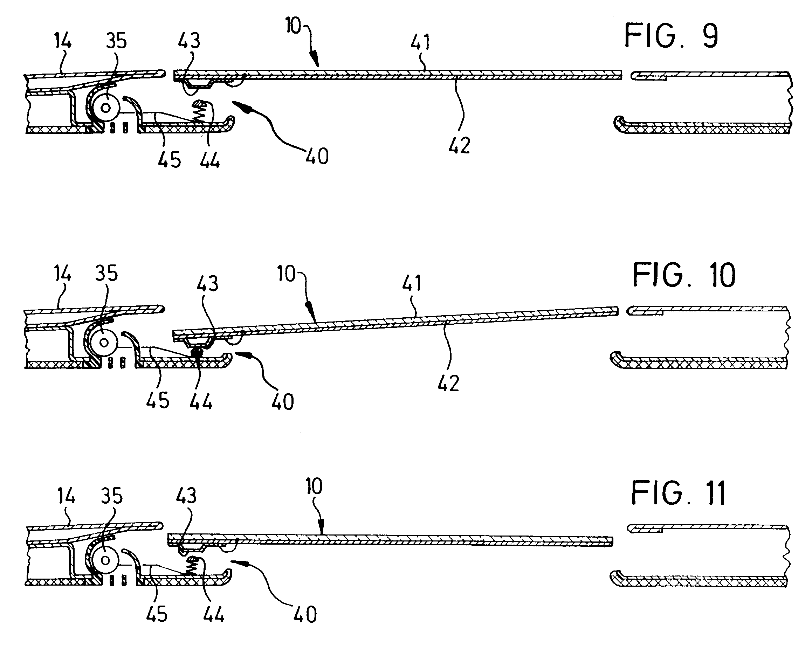

Der Deckel 10 kann zweckmäßig als Solarmodul ausgelegt sein, und das oder die Gebläse 35 bzw. 35′ können aus dem Solarmodul mit Strom versorgt werden. Ein solcher als Solarmodul aufgebauter Deckel 10 ist zusammen mit einer zugehörigen Kontakteinrichtung 40 schematisch in den Fign. 9, 10 und 11 dargestellt. Der Deckel 10 weist dabei eine Glasaußenschicht 41 und eine an der Innenseite der Glasaußenschicht flächig anliegende, lichtdurchlässige Solarzellenschicht 42 auf, die ihrerseits an der von der Außenseite der Schicht 41 abgewendeten Seite auf einer Trägerschicht abgestützt sein kann. Die Solarzellenschicht 42 kann aus amorphem oder kristallinem Halbleiterwerkstoff bestehen. Der Aufbau eines derartigen Solarmoduls ist beispielsweise in der DE-Patentanmeldung P 40 06 756.4 näher erläutert und braucht infolgedessen vorliegend nicht im einzelnen beschrieben zu werden. Die Kontakteinrichtung 40 weist eine mit der Solarzellenschicht 42 in elektrischer Verbindung stehende deckelseitige Kontaktplatte 43 und einen rahmenseitigen Federkontakt 44 auf. Die Kontakteinrichtung 40 liegt in einem in Fig. 10 schematisch angedeuteten Stromkreis 45 zwischen der Solarzellenschicht 42 und dem elektromotorisch angetriebenen Gebläse 35. Wenn der Deckel 10 in die Lüfterstellung (Fig. 10) gebracht ist, legt sich die Kontaktplatte 43 gegen den Federkontakt 44 an. Der Stromkreis 45 zwischen dem Solarmodul und dem Gebläse 35 wird geschlossen. Das Gebläse arbeitet. In allen anderen Deckelstellungen (beispielsweise den Stellungen nach den Fign. 9 und 11) ist bei dieser Ausführungsform der Stromkreis 45 aufgetrennt.

Stattdessen kann die Kontakteinrichtung 40 aber auch so ausgelegt sein, daß der Federkontakt 44 in den Deckelstellungen gemäß den Fign. 9, 10 und 11 sowie in allen Zwischenstellungen zwischen diesen Deckellagen mit der Kontaktplatte 43 in Eingriff gehalten wird und die Kontakteinrichtung 40 erst öffnet, wenn der Deckel 10 zurückgeschoben wird. Dabei versteht es sich, daß auch andere als die in den Fign. 9 bis 11 angedeutete Ausbildungen der Kontakteinrichtung 40 in Betracht kommen. Beispielsweise können Kontakteinrichtungen verwendet werden, die prinzipiell entsprechend wie die in der DE-Patentanmeldung P 40 20 655.6 näher erläuterten Kontakteinrichtungen aufgebaut sind.

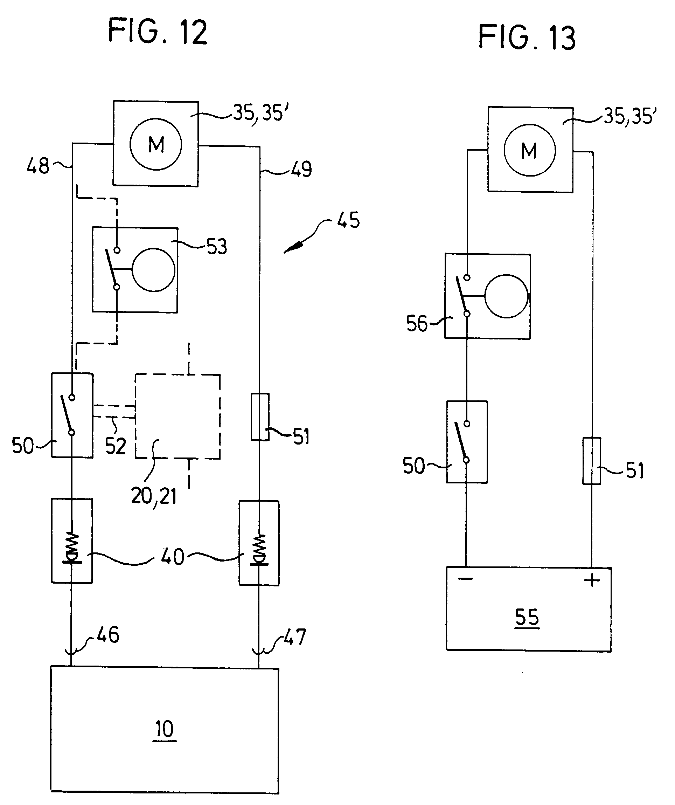

Ein Ausführungsbeispiel für den Stromkreis 45 zwischen dem den Deckel 10 bildenden Solarmodul und dem elektromotorisch angetriebenen Gebläse 35 bzw. 35′ ist in Fig. 12 veranschaulicht. Dabei ist der das Gebläse antreibende Motor bei M angedeutet. Das Solarmodul gibt, solange Strahlung auffällt, zwischen den Klemmen 46 und 47 eine Gleichspannung ab, die an den Gebläsemotor M über zwei Leitungen 48 und 49 angelegt werden kann. In jeder der beiden Leitungen 48, 49 liegt eine Kontakteinrichtung, die selbsttätig mindestens dann schließt, wenn der Deckel 10 in die Lüfterstellung (Fign. 2, 8 und 10) gebracht wird. Beispielsweise kann es sich dabei jeweils um eine Kontakteinrichtung 40 der in den Fign. 9 bis 11 skizzierten Art handeln. In Reihe mit der Kontakteinrichtung 40 in der Leitung 48 liegt ein EIN/AUS-Schalter 50, während in der anderen Leitung 49 zusätzlich zu der Kontakteinrichtung 40 eine Sicherung 51 angeordnet ist. Der ein EIN/AUS-Schalter 50 kann für Handbetätigung ausgelegt sein. Stattdessen oder zusätzlich kann aber auch dafür gesorgt sein, daß der Schalter 50 nach jeder Bewegung des Deckels 10 in den Zustand "AUS" gesetzt wird. Dadurch können zum einen von vorneherein ungewollte Gebläsebetätigungen ausgeschlossen werden. Zum anderen läßt sich dadurch verhindern, daß der Gebläsemotor M anläuft, wenn der Deckel 10 von der geschlossenen in die geöffnete Stellung (und umgekehrt) gefahren wird, wobei der Deckel die Lüfterstellung durchläuft und dabei die Kontakteinrichtungen 40 schließt. Für ein solches AUS-Setzen ist der Schalter 50, wie bei 52 angedeutet ist, mit dem Dachantrieb 20, 21 verbunden. Statt des EIN/AUS-Schalters 50 oder zusätzlich in Reihe zu diesem kann ein Thermoschalter 53 vorgesehen sein, der bei relativ niedrigen Temperaturen offen ist und der schließt, wenn die Fahrzeuginnentemperatur einen einstellbaren oder fest vorgegebenen Grenzwert überschreitet.

Die Gebläse 35 bzw. 35′ können aber auch an das Bordnetz angeschlossen werden. Ein einfaches Blockschaltbild dafür ist in Fig. 13 veranschaulicht. Die das Bordnetz speisende Batterie 55 ist dabei über die Sicherung 51 mit der einen Klemme des Gebläsemotors M sowie über eine Reihenschaltung aus dem EIN/AUS-Schalter 50 und einem Deckelstellungsschalter 56 mit der anderen Klemme des Gebläsemotors M verbunden. Der Schalter 50 hat die anhand der Fig. 12 erläuterte Funktion. Der Deckelstellungsschalter 56 wird in Abhängigkeit von der jeweiligen Stellung des Deckels 10 mindestens dann selbsttätig in die Schließstellung gebracht, wenn der Deckel 10 die Lüfterstellung erreicht. Die jeweilige Deckelstellung kann über Mikroschalter, Näherungsschalter oder dergleichen unmittelbar am Deckel abgefragt werden. Stattdessen ist es aber auch möglich, die Deckelstellung mittelbar am Dachantrieb 20, 21 zu erfassen.

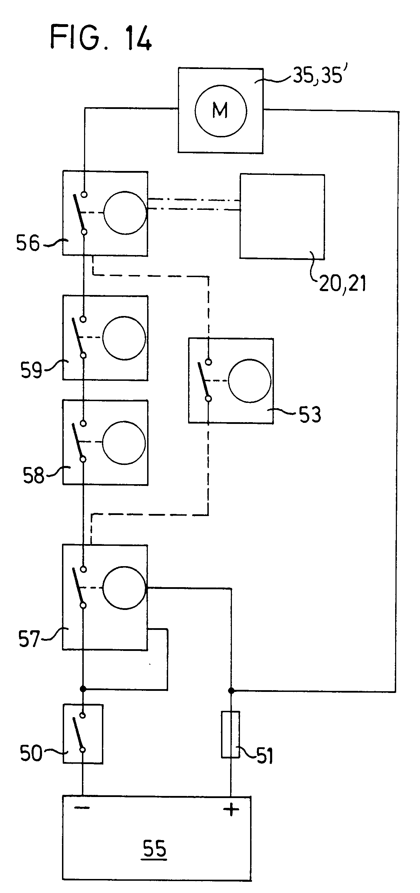

Entsprechend Fig. 14 läßt sich die Schaltungsauslegung gemäß Fig. 13 weiter verfeinern. Im Steuerstromkreis des Gebläses 35 bzw. 35′ liegt zusätzlich eine Überwachungsstufe 57, die das Gebläse von dem Bordnetz trennt, wenn die Ladung der Bordstromquelle (Batterie 55) einen vorgegebenen Schwellwert unterschreitet. Damit wird einer unzulässig weitgehenden Entladung der Bordstromquelle durch das Gebläse vorgebeugt. In Reihe mit der Überwachungsstufe 57 liegen ferner zwei Zeitschalter 58 und 59. Der eine Zeitschalter 58 erfaßt die Uhrzeit und kann so eingestellt werden, daß er bei vorwählbaren Uhrzeiten schließt und/oder öffnet. Der zweite Zeitschalter 59 schließt für eine vorwählbare Zeitdauer. Die Zeitschalter 58 und 59 erlauben es unter anderem, die Gebläse 35, 35′ zu einer vorbestimmten Zeit anlaufen zu lassen und/oder für eine gewisse Zeit nachlaufen zu lassen.

Zusätzlich zu den Zeitschaltern oder statt dieser kann, wie angedeutet, der anhand der Fig. 12 erläuterte Thermoschalter 53 vorgesehen sein.

Auch eine wahlweise Speisung der Gebläse aus dem Bordnetz oder aus einer Solarstromquelle ist möglich.

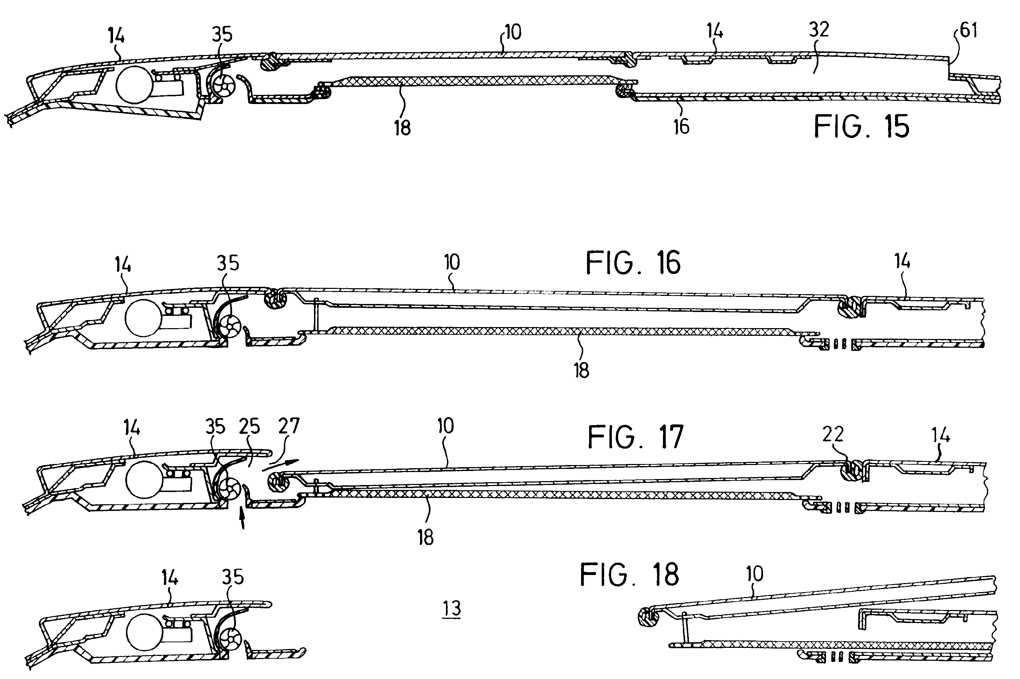

Während bei den Ausführungsformen nach den Fign. 1, 2 und 3 der den zurückgeschobenen Deckel 10 aufnehmende Raum 32 nach hinten geschlossen ist, zeigt die Fig. 15 eine abgewandelte Ausführungsform, bei welcher im hinteren Bereich des Fahrzeugdaches Entlüftungsschlitze 61 vorgesehen sind, die mit dem Raum 32 zwischen der Dachhaut 14 und dem Dachhimmel 16 in Verbindung stehen. Im Falle dieser Ausführungsform können die Gebläse 35 bzw. 35′ genutzt werden, um Luft auch aus dem Fahrzeuginnenraum über die Entlüftungsschlitze 61 abzuführen, während der Deckel 10 in der Schließstellung steht.

Die weitere Ausführungsform gemäß den Fign. 16, 17 und 18 unterscheidet sich von der Lösung nach den Fign. 1, 2 und 3 im wesentlichen dadurch, daß zum Freilegen des Dachausschnitts 13 der Deckel 10 nicht hinten abgesenkt und dann unter die Dachhaut geschoben, sondern mit seiner Hinterkante 22 über die Dachhaut 14 ausgestellt und nach Art eines Spoilerdaches oberhalb der Dachhaut 14 nach hinten verstellt wird. Eine für einen solchen Bewegungsablauf geeignete Verstellmechanik ist in der DE-Patentanmeldung P 39 03 035.0 beschrieben und braucht daher vorliegend nicht im einzelnen erörtert zu werden. Auch bei diesem Dach ist in dem von dem Lüftungsspalt 27 in den Fahrzeuginnenraum führenden Lüftungskanal 25 mindestens ein elektromotorisch angetriebenes Gebläse 35 (bzw. 35′) eingebaut, das insbesondere bei stehendem Fahrzeug für eine aktive Belüftung des Fahrzeuginnenraumes sorgen kann.

## Patentansprüche

1. Lüfterdach für Fahrzeuge mit einem in einer festen Dachhaut (14) ausgebildeten Dachausschnitt, (13) der mittels eines Deckels (10) verschließbar ist, der durch Verschwenken um eine an oder nahe seiner Hinterkante liegende Schwenkachse in eine Lüfterstellung schwenkbar ist, in welcher bei mindestens näherungsweise in Höhe der Dachhaut (14) gehaltener Deckelhinterkante (22) die Deckelvorderkante (23) in Abstand unterhalb der Dachhaut (14) liegt und zwischen der Deckelvorderkante (23) und der Vorderkante des Dachausschnitts (13) ein Lüftungsspalt (27) gebildet wird, der über einen vor dem Dachausschnitt (13) unterhalb der Dachhaut (14) liegenden, in den Fahrzeuginnenraum führenden Lüftungskanal (25) mit wenigstens einem Luftdurchtrittsspalt (28) in einem festen Dachhimmel (16) verbunden ist, welcher die Dachhaut (14) mindestens in einem vor dem Dachausschnitt (13) liegenden Bereich untergreift, **dadurch gekennzeichnet**, daß in dem Lüftungskanal (25) mindestens ein elektromotorisch angetriebenes Gebläse (35, 35′) eingebaut ist.

2. Lüfterdach nach Anspruch 1, dadurch gekennzeichnet, daß in den Luftdurchtrittsspalt (28) mindestens ein Lüftungsgitter (29, 29′, 29˝) eingesetzt ist.

3. Lüfterdach nach Anspruch 2, dadurch gekennzeichnet, daß das Gebläse (35) und das Lüftungsgitter (29) zu einer Baueinheit (37) zusammengefaßt sind.

4. Lüfterdach nach Anspruch 3, dadurch gekennzeichnet, daß das Gebläse (35) ein Gehäuse (38) aufweist, das mit dem Lüftungsgitter (29) einstückig verbunden ist.

5. Lüfterdach nach Anspruch 4, dadurch gekennzeichnet, daß das zugleich das Gebläsegehäuse (38) bildende Lüftungsgitter (29) als Austauschteil zu einem einfachen Lüftungsgitter ausgebildet ist.

6. Lüfterdach nach einem der Ansprüche 1 bis 2 mit einem den Dachausschnitt untergreifenden, den Deckel und die zugehörigen Funktionsteile tragenden Dachrahmen, dadurch gekennzeichnet, daß das Gebläsegehäuse (38′) von dem Dachrahmen (15) gebildet ist.

7. Lüfterdach nach einem der vorhergehenden Ansprüche, dadurch gekennzeichnet, daß der Deckel (10) als Solarmodul ausgebildet ist, von dem das elektromotorisch angetriebene Gebläse (35, 35′) mit Strom versorgt werden kann.

8. Lüfterdach nach Anspruch 7, dadurch gekennzeichnet, daß in dem Stromkreis zwischen dem Solarmodul und dem Gebläse (35, 35′) eine Kontakteinrichtung (40) liegt, die selbsttätig mindestens dann schließt, wenn der Deckel (10) in der Lüfterstellung steht.

9. Lüfterdach nach Anspruch 8, dadurch gekennzeichnet, daß die Kontakteinrichtung (40) derart ausgebildet ist, daß sie den Stromkreis (45) zwischen dem Solarmodul und dem Gebläse (35, 35′) auch in der Schließstellung des Deckels (10) geschlossen hält.

10. Lüfterdach nach einem der vorhergehenden Ansprüche, dadurch gekennzeichnet, daß das Gebläse (35, 35′) an das Bordnetz anschließbar ist.

11. Lüfterdach nach Anspruch 10, gekennzeichnet durch eine Überwachungsstufe (57), die das Gebläse (35, 35′) von dem Bordnetz trennt, wenn die Ladung der Bordstromquelle (55) einen vorgegebenen Schwellwert unterschreitet.

12. Lüfterdach nach einem der vorhergehenden Ansprüche, dadurch gekennzeichnet, daß in einem Steuerstromkreis des Gebläses (35, 35′) mindestens ein Zeitschalter (58, 59) liegt.

13. Lüfterdach nach einem der vorhergehenden Ansprüche, dadurch gekennzeichnet, daß zur Steuerung des Gebläses (35, 35′) ein Thermoschalter (53) vorgesehen ist.

14. Lüfterdach nach einem der vorhergehenden Ansprüche, dadurch gekennzeichnet, daß das Gebläse (35) als Querstromgebläse ausgebildet ist.

15. Lüfterdach nach einem der Ansprüche 1 bis 13, dadurch gekennzeichnet, daß das Gebläse (35′) als Axialgebläse ausgebildet ist.

16. Lüfterdach nach einem der vorhergehenden Ansprüche, dadurch gekennzeichnet, daß das mindestens eine Gebläse (35, 35′) in Fahrzeugquerrichtung mittig in dem Lüftungskanal (25) angeordnet ist und zu beiden Seiten des Gebläses freie Lüftungsöffnungen (36) verbleiben.

17. Lüfterdach nach einem der Ansprüche 1 bis 15, dadurch gekennzeichnet, daß in Fahrzeugquerrichtung auf der rechten und der linken Seite des Lüftungskanals (25) mindestens jeweils eine Gebläse (35, 35′) angeordnet ist und dazwischen freie Lüftungsöffnungen (36) verbleiben.

18. Lüfterdach nach einem der vorhergehenden Ansprüche, dadurch gekennzeichnet, daß im hinteren Bereich des Fahrzeugdaches Entlüftungsschlitze (61) vorgesehen sind, die mit einem Raum (32) zwischen der Dachhaut (14) und einem Dachhimmel (16) in Verbindung stehen und daß über diesen Raum (32) und die Entlüftungsschlitze (61) mittels des Gebläses (35, 35′) Luft aus dem Fahrzeuginnenraum abführbar ist, wenn der Deckel (10) in der Schließstellung steht.

19. Lüfterdach nach einem der vorhergehenden Ansprüche, dadurch gekennzeichnet, daß der Deckel mit seiner Hinterkante unter die Dachhaut (14) absenkbar oder über die Dachhaut ausstellbar und nach hinten unter bezw. über die Dachhaut in eine Offenstellung verschiebbar ist, in welcher der Deckel den Dachausschnitt (13) mindestens teilweise freilegt.

## Claims

1. A ventilator roof for vehicles with a roof opening (13) constructed in a fixed roof skin (14) and which can be closed by means of a cover (10) which can be swung by being pivoted about an axis disposed on or close to its rear edge and into a ventilation position in which, if the rear edge (22) of the cover is at least approximately at the same height as the roof skin (14), the front edge (22) of the cover is situated at a distance below the roof skin (14), a ventilating gap being formed between the front edge (23) of the cover and the front edge of the roof opening (13), the said ventilation gap (27) being connected via a ventilation channel (25) leading into the vehicle interior and disposed under the roof skin (14) and in front of the roof opening (13), said ventilation channel being connected to at least one air gap (28) in a fixed roof headlining (16) of which at least a portion disposed in front of the roof opening (13) engages beneath the roof skin (14), characterised in that at least one fan (35, 35′) driven by an electric motor is installed in the ventilation channel (25).

2. A ventilator roof according to Claim 1, characterised in that at least one ventilation screen (29, 29′, 29˝) is incorporated into the air gap (28).

3. A ventilator roof according to Claim 2, characterised in that the fan (35) and the ventilation screen (29) are combined into one self-contained unit (37).

4. A ventilator roof according to Claim 3, characterised in that the fan (35) comprises a housing (38) which is integrally connected to the ventilation screen (29).

5. A ventilator roof according to Claim 4, characterised in that the ventilation screen (29) which at the same time constitutes the fan housing (38) is constructed as an exchangeable part with respect to a basic ventilation screen.

6. A ventilator roof according to one of Claims 1 to 2 with a roof frame, engaging under the roof opening, which supports the cover and the associated functioning parts, characterised in that the fan housing (38′) is formed by the roof frame (15).

7. A ventilator roof according to one of the preceding Claims, characterised in that the cover (10) is constructed as a solar module by which the electric motor-driven fan (35, 35′) can be supplied with current.

8. A ventilator roof according to Claim 7, characterised in that there is a contact device (40) in the circuit between the solar module and the fan (35, 35′) which automatically closes at least when the cover (10) is in the ventilation position.

9. A ventilator roof according to Claim 8, characterised in that the contact device (40) is constructed so that it maintains the circuit (45) between the solar module and the fan (35, 35′) closed even when the cover (10) is in the closed position.

10. A ventilator roof according to one of the preceding Claims, characterised in that the fan (35, 35′) can be connected to the in-car power supply.

11. A ventilator roof according to Claim 10, characterised in that a monitoring stage (57) can isolate the fan (35, 35′) from the in-car power supply when the charge in the in-car power supply source (55) falls below a given threshold.

12. A ventilator roof according to one of the preceding Claims, characterised in that at least one time switch (58, 59) is disposed in a control circuit of the fan (35, 35′).

13. A ventilator roof according to one of the preceding Claims, characterised in that a thermal cut-out (53) is provided in order to control the fan (35, 35′).

14. A ventilator roof according to one of the preceding Claims, characterised in that the fan (35) is constructed as a cross-current fan.

15. A ventilator roof according to one of Claims 1 to 13, characterised in that the fan (35′) is constructed as an axial fan.

16. A ventilator roof according to one of the preceding Claims, characterised in that the at least one fan (35, 35′) is, in the transverse direction of the vehicle, disposed centrally in the ventilation channel (25), free ventilation apertures (36) being left on both sides of the fan.

17. A ventilator roof according to one of Claims 1 to 15, characterised in that in the transverse direction of the vehicle, on the right- and left-hand sides of the ventilation channel (25) there is at least one fan (35, 35′), between which there are free ventilation apertures (36).

18. A ventilator roof according to one of the preceding Claims, characterised in that there are in the rear part of the vehicle roof ventilation slits (61) which communicate with a space (32) between the roof skin (14) and a roof headlining (16) and in that via this space (32) and the ventilation slits (61), air can be extracted by means of the fan (35, 35′) from the interior of the vehicle, when the cover (10) is in the closed position.

19. A ventilator roof according to one of the preceding Claims, characterised in that the rear edge of the cover can be lowered below the roof skin (14) or can be pushed out above the roof skin and moved rearwardly beneath or above the roof skin into an open position in which the cover at least partially exposes the roof opening (13).

## Revendications

1. Toit à ventilation pour véhicules avec une découpe de toit (13) constituée dans une surface fixe du toit (14), qui peut être fermée au moyen d'un couvercle (10), qui peut pivoter par basculement, autour d'un axe de pivotement se trouvant sur ou près de son bord arrière, dans une position de ventilation, dans laquelle, quand le bord arrière du couvercle est maintenu au moins de façon approximative à la hauteur de la surface du toit (14), le bord antérieur du couvercle (23) se trouve à une certaine distance en dessous de la surface du toit (14) et dans laquelle entre le bord antérieur du couvercle (23) et le bord antérieur de la découpe du toit (13) forme une fente de ventilation (27) reliée par un canal de ventilation (25) se trouvant avant la découpe du toit (13) en dessous de la surface du toit (14), canal passant a l'intérieur du véhicule, au moins à une fente de passage d'air (28) dans un plafond fixe du toit (16), qui vient en prise sous la surface du toit (14) au moins dans une zone se trouvant avant la découpe du toit (13), caractérisé en ce que dans le canal de ventilation (25) est incorporée au moins une soufflante entraînée par un moteur électrique (35, 35′).

2. Toit à ventilation selon la revendication 1, caractérisé en ce que dans la fente de passage de l'air (28) on monte au moins une grille de ventilation (29, 29′, 29˝).

3. Toit à ventilation selon la revendication 2, caractérisé en ce que la soufflante (35) et la grille de ventilation (29) sont réunies en une construction unique (37).

4. Toit à ventilation selon la revendication 3, caractérisé en ce que la soufflante (35) présente un carter (38), relié d'une seule pièce à la grille de ventilation (29).

5. Toit à ventilation selon la revendication 4, caractérisé en ce que la grille de ventilation (29) formant en même temps le carter de la soufflante (38) est constitué comme pièce de remplacement à une simple grille de ventilation.

6. Toit à ventilation selon l'une des revendications 1 à 2 avec un cadre de toit venant en prise sous la découpe du toit, portant le couvercle et les parties fonctionnelles correspondantes, caractérisé en ce que le carter de la soufflante (38′) est formé par le cadre de toit (15).

7. Toit à ventilation selon l'une des revendications précédentes, caractérisé en ce que le couvercle (10) est constitué comme un module solaire à partir duquel on peut alimenter en courant la soufflante (35, 35′) entraînée par un moteur électrique.

8. Toit à ventilation selon la revendication 7, caractérisé en ce que dans le circuit électrique compris entre le module solaire et la soufflante (35, 35′), se trouve un dispositif de contact (40), qui se ferme automatiquement au moins quand le couvercle (10) est en position de ventilation.

9. Toit à ventilation selon la revendication 8, caractérisé en ce que le dispositif de contact (40) est constitué de telle façon qu'il maintient fermé le circuit électrique (45) compris entre le module solaire et la soufflante (35, 35′) même quand le couvercle (10) est en position fermée.

10. Toit à ventilation selon l'une des revendications précédentes, caractérisé en ce que l'on peut raccorder la soufflante (35, 35′) au réseau de bord.

11. Toit à ventilation selon la revendication 10, caractérisé par un étage de contrôle (57) qui sépare la soufflante (35, 35′) du réseau de bord, quand la charge de la source de courant du véhicule (55) tombe en dessous d'une valeur de seuil prédéfinie.

12. Toit à ventilation selon l'une des revendications précédentes, caractérisé en ce qu'il y a au moins un interrupteur à minuterie (58, 59) dans un circuit électrique de commande de la soufflante (35, 35′).

13. Toit à ventilation selon l'une des revendications précédentes, caractérisé en ce que l'on prévoit un interrupteur thermoélectrique (53) pour commander la soufflante (35, 35′).

14. Toit à ventilation selon l'une des revendications précédentes, caractérisé en ce que la soufflante (35) est constituée sous forme d'une soufflante à courant transversal.

15. Toit à ventilation selon l'une des revendications 1 à 13, caractérisé en ce que la soufflante (35′) est constituée sous forme d'une soufflante axiale.

16. Toit à ventilation selon l'une des revendications précédentes, caractérisé en ce que l'une au moins des soufflantes (35, 35′) est disposée dans le sens transversal du véhicule au milieu dans le canal de ventilation (25) et que des orifices libres de ventilation (36) demeurent des deux côtés de la soufflante.

17. Toit à ventilation selon l'une des revendications 1 à 15, caractérisé en ce que l'on dispose dans le sens transversal du véhicule sur le côté droit et sur le côté gauche du canal de ventilation (25) au moins respectivement une soufflante (35, 35′) et en ce que des orifices libres de ventilation (36) demeurent entre les deux.

18. Toit à ventilation selon l'une des revendications précédentes, caractérisé en ce que dans la zone arrière du toit à ventilation sont prévue des fentes de ventilation (61), qui sont en liaison avec une chambre (32) comprise entre la surface du toit (14) et un plafond de toit (16) et en ce que de l'air, via cette chambre (32) et la fente de ventilation (61) peut être extrait au moyen de la soufflante (35, 35′) à partir de l'habitacle du véhicule, quand le couvercle est en position fermée.

19. Toit à ventilation selon l'une des revendications précédentes, caractérisé en ce que le couvercle peut être abaissé par son bord arrière sous la surface du toit (14) ou peut être dressé au-dessus de la surface du toit ou peut être repoussé vers l'arrière en dessous ou au-dessus de la surface du toit en position ouverte, dans laquelle le couvercle libère au moins en partie la section de toit (13).
